Europäisches Patentamt

European Patent Office

Office européen des brevets

(19)

(11) Numéro de publication: **0 243 268
B1**

(12) **FASCICULE DE BREVET EUROPEEN**

(45) Date de publication du fascicule du brevet:
**25.07.90**

(51) Int. Cl.⁵: **B65G 17/04**

(21) Numéro de dépôt: **87400923.6**

(22) Date de dépôt: **22.04.87**

(54) **Dispositif pour le transport avec chargement et déchargement de produits en pâte molle.**

(30) Priorité: **23.04.86 FR 8605901**

(43) Date de publication de la demande:
**28.10.87 Bulletin 87/44**

(45) Mention de la délivrance du brevet:
**25.07.90 Bulletin 90/30**

(84) Etats contractants désignés:
**AT BE CH DE ES FR GB GR IT LI LU NL SE**

(56) Documents cités:
**GB-A- 521 312
US-A- 3 225 898**

(73) Titulaire: **FRIGOFRANCE S.A. Société Anonyme dite:,
Place de la Bastille Les Couets,
F-44340 Bouguenais(FR)**

(72) Inventeur: **Lucas, Joel, 11, Avenue du Maréchal Ney,
F-44000 Nantes(FR)**
Inventeur: **Duportail, Alain, Les Fontenelles Château
Thébaud, F-44690 La Haie Fouassière(FR)**

(74) Mandataire: **Caunet, Jean et al, Cabinet BEAU DE
LOMENIE 55, rue d'Amsterdam, F-75008 Paris(FR)**

# Description

La présente invention concerne un dispositif pour le transport avec chargement et déchargement de produits en pâte molle, plus spécialement de pains, baguettes ou autres en pâte crue pendant leur surgélation.

Une baguette de pain crue présente, en sortie de laminoir par exemple, une grande longueur (jusqu'à 700 mm) et un faible diamètre (entre 20 et 25 mm). Une telle baguette est très instable et tend à se déformer en raison des contraintes dans la pâte et des transferts d'un moyen de transport vers un autre. Elle ne reste d'ailleurs pas immobile même lorsqu'elle n'est pas sollicitée. Dès lors, elle n'est pratiquement jamais rectiligne et c'est pourtant la forme qu'elle devrait prendre et conserver. Par ailleurs, la pâte est collante de sorte que tout changement de position s'accompagne inévitablement d'une déformation.

La difficulté est donc de transporter une telle baguette ou autre produit en pâte molle équivalent. Dans une application particulière mais non restrictive, les baguettes sont prises en charge par un tapis circulant dans un surgélateur suivant une trajectoire rectiligne ou de préférence enroulée en spirale. Les baguettes surgelées qui sont délivrées par le tapis sont extrêmement fragiles et se cassent lors de leur emballage en botte si elles ne sont pas rectilignes.

Dans les surgélateurs-tunnels qui sont traversés par des tapis transporteurs rectilignes, il est connu d'équiper le tapis d'auges transversales s'étendant dans son plan.

Un premier inconvénient de ce dispositif de transport connu est qu'il n'est applicable que pour une trajectoire rectiligne, ce qui impose une aire d'occupation du sol très importante. Il n'en serait pas de même si la bande à auges pouvait suivre une trajectoire spirale, car dans ce cas l'installation est compacte et sa surface au sol très limitée.

Un deuxième inconvénient est que la hauteur de chute du produit en pâte molle lors du chargement des auges du dispositif de de transport connu et de leur déchargement est relativement grande et en tout cas suffisante pour que le produit cru puisse se déformer et le produit surgelé puisse casser.

Par ailleurs, ces tapis rectilignes à auges sont du type séquentiel, en ce sens que leur avance au lieu d'être continue, est intermittente.

Dans un mode d'exécution connu, un transporteur d'alimentation à avance continue amène successivement les baguettes en pâte crue contre une butée fixe sous laquelle circule le tapis à auges à avancement séquentiel. Une auge doit en effet s'immobiliser sous la butée à chaque fois que celle-ci arrête une baguette.

Dans un autre mode d'exécution connu, un transporteur d'alimentation à avance continue délivre successivement les baguettes en pâte crue à une trémie ou Vé dont l'élément d'ouverture est situé audessus du tapis à auges à avancement séquentiel. Cet élément s'ouvre lorsqu'une auge se trouve immobilisée à l'aplomb.

Le troisième inconvénient de ce dispositif de transport connu, inconvénient qui est majeur, résulte du fait que le tapis à auges doit procéder par avancement séquentiel pour son chargement. A cet égard, il est utile de rappeler qu'un tel tapis rectiligne s'étend sur 40 m environ et supporte à peu près 1000 baguettes, ses arrêts devant se produire à raison de 1800 par heure par exemple pour un fonctionnement normal. Il est clair alors que la fiabilité du dispositif est limitée à cause de l'usure et des à-coups, que les temps morts pour l'entretien et les réglages sont inévitablement importants, que le système est imprécis et se dérègle facilement ...

La présente invention a pour but de remédier à ces inconvénients en proposant des perfectionnements tels que le tapis à auges peut suivre une trajectoire spirale, que ce tapis, qu'il soit rectiligne ou spiral, peut fonctionner à avancement continu et que le chargement des produits en pâte molle dans les auges, comme leur déchargement, peuvent être effectués pratiquement sans chute, c'est-à-dire en dépose douce. Toutes les manipulations doivent être entièrement automatiques, c'est-à-dire sans aucune intervention manuelle sur les produits.

Dans ce but, le dispositif de transport de l'invention comprend, comme l'élévateur décrit dans le brevet anglais nº 521 312, deux chaînes guidées le long d'éléments de guidage et une pluralité d'auges s'étendant côte à côte transversalement pour recevoir d'en haut lesdits produits, les auges étant suspendues à des traverses reliées aux chaines et situées au-dessus de la surface définie par celles-ci de façon à former un tapis à auges surélevées. Il est précisé cependant que dans ce brevet anglais, les traverses sont elles-mêmes guidées le long d'éléments de guidage et reliées aux tiges d'articulation des maillons des chaînes par des pattes souples.

Conformément à l'invention, le dispositif de transport fait application d'un tapis particulier, du type décrit dans le brevet US 3 225 898. Ce tapis comporte deux chaînes rétractables dont les maillons sont articulés entre eux au moyen de tiges s'étendant transversalement entre ces chaînes, chaque extreémité de tige étant fixée à un maillon et traversant librement une lumière longitudinale de guidage du maillon conjugué. Ledit tapis peut donc suivre une trajectoire spirale.

Toujours conformément à l'invention, chaque traverse fait corps au moyen de parties latérales montantes rigides avec la tige sélectionnée des deux chaînes; les tiges des deux chaînes sont en outre guidées avec précision le long de moyens de guidage, les traverses étant exemptes de guidage.

Grâce à cette structure particulière du tapis, les parties latérales montantes sont toujours perpendiculaires à la surface de guidage du tapis. Dès lors, la conformation des auges se trouve parfaitement maîtrisée et sa modification peut être assurée avec précision, bien que les auges soient souples, simplement en intervenant sur ladite surface de guidage.

Dans le cadre d'un défilement continu du tapis à auges surélevées, ce tapis coopère avec un dispositif de chargement recevant par gravité les produits en pâte molle et les distribuant successivement dans les auges défilant en continu, le dispositif de chargement étant actionné par un dispositif de commande asservi à la vitesse du tapis et relié à un circuit de déclenchement à fonction "et" recevant les impulsions d'un détecteur de produit dans ce dispositif de chargement et d'un détecteur de passage de l'une des parties montantes de chaque traverse support d'auge.

Suivant une première forme de réalisation, le dispositif de chargement comporte, considérant le sens de défilement du tapis, au-dessus de ces auges, une trémie de réception des produits en pâte molle dont la paroi aval est faiblement inclinée vers le bas et l'amont par rapport à un plan transversal vertical et dont l'élément d'ouverture situé au plus près des auges est relié pour se déplacer vers l'amont à un organe d'actionnement mis sous la dépendance du dispositif de commande précité.

La trémie peut présenter une paroi amont descendant en rampe inclinée jusqu'à la paroi aval, cette rampe étant montée pivotante et reliée à l'organe d'actionnement précité pour constituer l'élément d'ouverture.

Ou bien la trémie peut présenter une paroi amont descendant en rampe inclinée en délimitant avec la paroi aval une ouverture de distribution, cette ouverture étant obturée par une trappe coulissante reliée à l'organe d'actionnement précité.

Suivant une deuxième forme de réalisation, le dispositif de chargement comporte un rotor monté tournant autour d'un axe transversal et relié à un dispositif d'entraînement en rotation mis sous la dépendance du dispositif de commande précité, ce rotor délimitant des alvéoles périphériques concaves qui, lorsqu'ils se trouvent successivement en position de distribution, reçoivent par gravité un produit en pâte molle et le dirigent vers une paroi située, si l'on considère le sens de défilement des auges, en aval du rotor, lequel tourne en faisant défiler les alvéoles dans le sens opposé à celui des auges et ladite paroi aval étant faiblement inclinée vers le bas et l'amont par rapport à un plan transversal vertical.

Quelle que soit la forme de réalisation choisie, au moins la paroi aval peut être reliée, pour accompagner lors de l'ouverture de la trémie les auges vers l'aval, à un organe d'actionnement mis sous la dépendance du dispositif de commande précité.

Par ailleurs, pour réduire la hauteur de chute d'un produit en pâte molle, les éléments de guidage du tapis à auges surélevées présentent, en regard de l'ouverture de distribution du dispositif de chargement ou de l'aire de réception d'un dispositif de déchargement, des portions convexes en saillie vers le haut de façon qu'en franchissant ces portions, les parties montantes des deux traverses-supports contiguës de chaque auge divergent vers le haut et tendent l'auge considérée en l'aplatissant et en la rapprochant de ladite ouverture.

Pour redresser un produit en pâte molle, les éléments de guidage du tapis à auges surélevées présentent, en aval de l'ouverture de distribution du dispositif de chargement, des portions concaves en creux vers le haut de façon qu'en franchissant ces portions, les parties montantes des deux traverses-supports contiguës de chaque auge convergent vers le haut et tendent à refermer l'auge considérée sur elle-même.

Chaque élément de guidage peut alors comporter, dans chaque partie convexe ou concave de la trajectoire, un rouleau inférieur ou supérieur interposé entre des éléments de rail inférieurs ou supérieurs, montés fous et coopérant avec des éléments de rail supérieurs ou inférieurs respectivement, situés de part et d'autre.

Divers avantages de l'invention ressortent d'ailleurs de la description détaillée qui suit.

Des formes de réalisation de l'objet de l'invention sont représentées, à titre d'exemples non limitatifs sur le dessin annexé.

Sur ce dessin :

- la figure 1 est une vue de dessus illustrant un tapis spiral sur lequel est adapté le dispositif conforme à l'invention, cette vue en plan étant prise suivant la ligne I-I de la figure 2,
- la figure 2 est une élévation latérale prise suivant la flèche f de la figure 1,
- la figure 3 est une coupe transversale schématique prise suivant la ligne III-III de la figure 1,
- la figure 4 est une perspective partielle prise à grande échelle pour montrer quelques maillons d'une chaîne, des tiges transversales et une portion d'arceau, les auges ayant été supprimées pour améliorer la compréhension du dessin,
- la figure 5 est une vue partielle analogue à la figure 3 se rapportant à une variante de guidage,
- les figures 6 à 9 sont des élévations schématiques illustrant plusieurs formes de réalisation du dispositif de chargement coopérant selon l'invention avec les auges du tapis.
- la figure 10 est une vue analogue aux figures 6 à 9 représentant une forme de réalisation du dispositif de déchargement coopérant selon l'invention avec les auges du tapis.

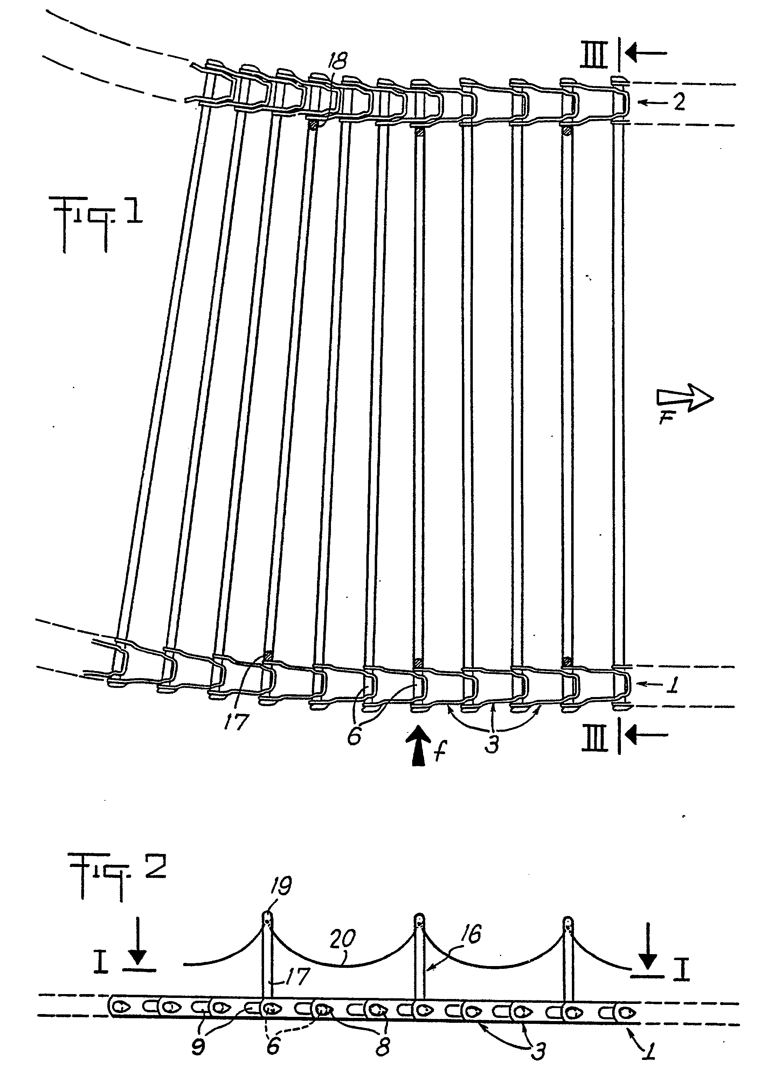

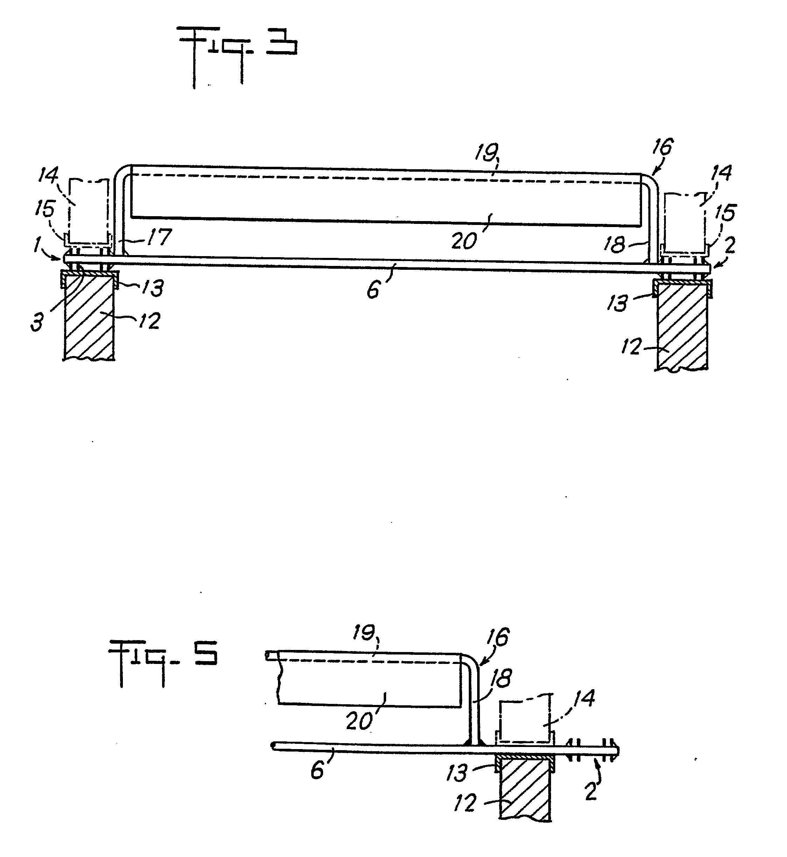

Ainsi que cela ressort clairement des figures 1 à 4, le dispositif de transport de l'invention s'adapte à un tapis spiral mobile connu notamment par le brevet US 3 225 898, tapis qui véhicule des baguettes en pâte crue dans une enceinte compacte de surgélateur.

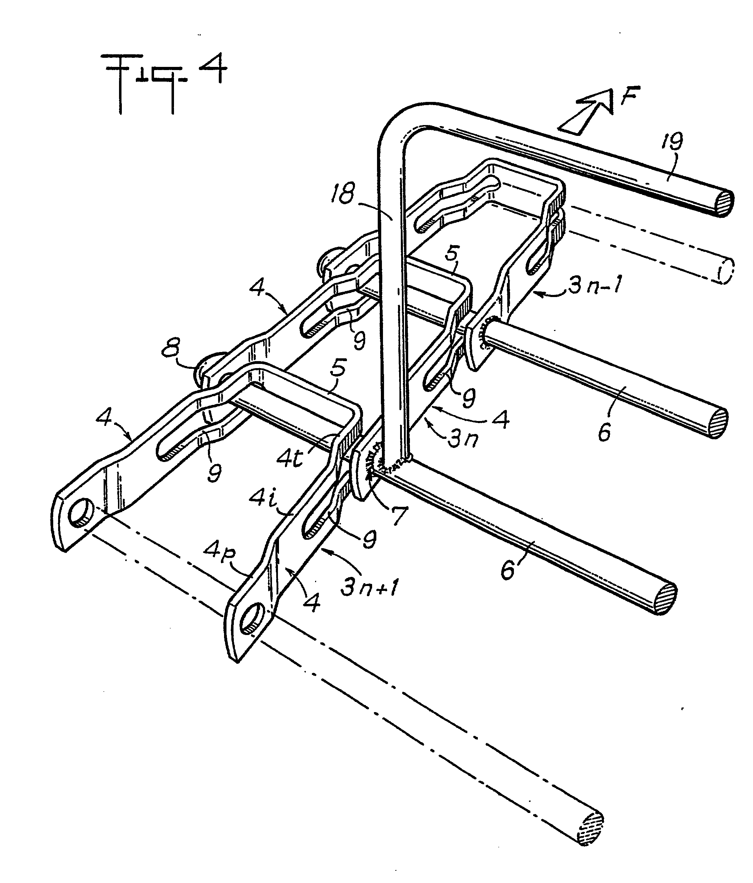

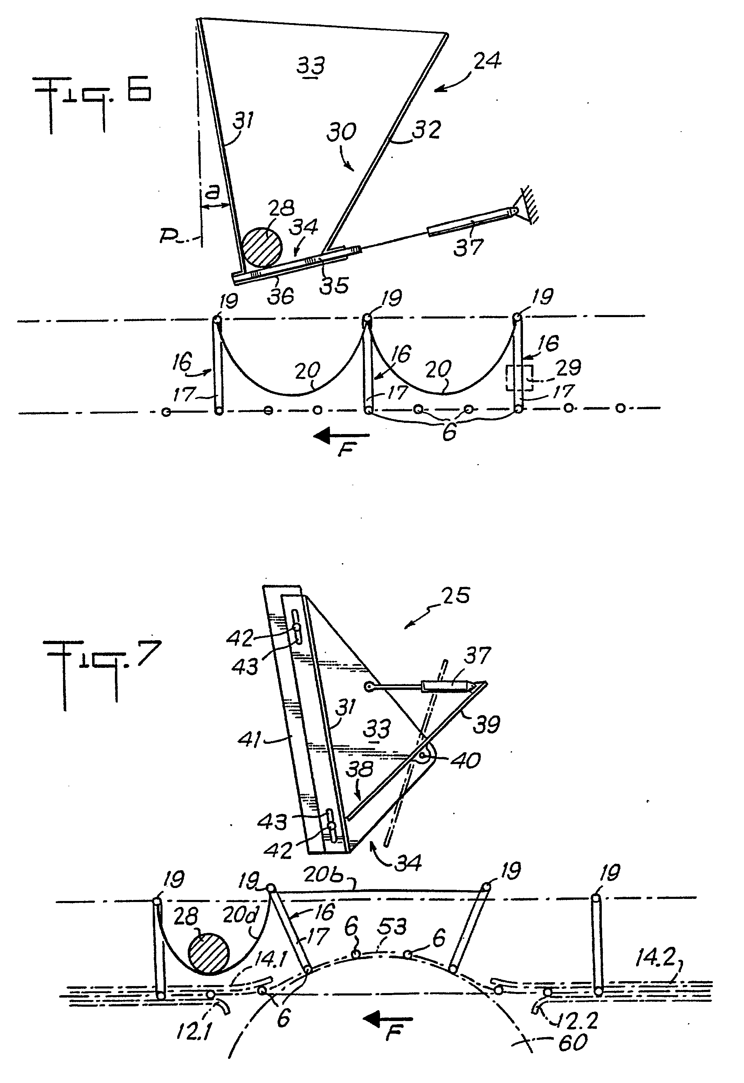

Ce tapis comporte deux chaînes marginales 1 et 2 dont les maillons 3 identiques entre eux s'emboîtent partiellement les uns dans les autres et s'articulent deux à deux l'un par rapport à l'autre. Dans l'exemple représenté sur les figures 1 et 4, chaque maillon 3 est en tôle pliée en U symétrique dont les branches 4 faisant corps avec l'âme 5 sont sinueuses pour former une partie de tête étroite et borgne 4 t et une partie de pied élargie et ouverte 4 p, reliées par une partie intermédiaire 4 i. Les branches 4 de la partie de pied 4 p d'un maillon 3.n de la chaîne 1 sont reliées aux branches 4 de la partie de pied 4 p du maillon homologue 3.n de la chaîne 2 par une tige transversale 6 dont les extrémités sont soudées en 7 et 8 sur lesdites branches ; par ailleurs, les parties de pied 4 p des maillons considérés 3.n des chaînes 1 et 2 sont emboîtées sur les parties de tête 4 t des maillons contigüs 3.n+1 de ces chaînes situés en amont si l'on considère le sens F de défilement du tapis qui est le sens suivant lequel la traction motrice est appliquée ; de plus, la tige 6 précitée du maillon 3.n traverse des lumières allongées 9 ménagées dans les parties intermédiaires 4i et de tête 4t du maillon 3.n+1, tandis que les lumières 9 du maillon 3.n sont traversées par la tige 6 du maillon contigu aval 3.n-1 ; ainsi, un jeu longitudinal se trouve prévu au niveau des articulations entre les maillons deux à deux ; ce jeu permet dans les courbes de raccourcir la chaîne intérieure 2 (figure 1) par rapprochement des tiges 6 de l'extrémité des lumières 9 se trouvant dans la partie intermédiaire 4 i des maillons et de laisser allongée la chaîne extérieure 1 (figure 1) par butée des mêmes tiges 6 contre l'extrémité des lumières 9 se trouvant près de l'âme 5 des maillons.

Pour suivre sa trajectoire spirale ou rectiligne, le tapis mobile doit être guidé. Dans l'exemple représenté sur la figure 3, les maillons 3 des chaînes 1 et 2 reposent sur des rails inférieurs 12 éventuellement recouverts d'un revêtement de glissement 13. Ces rails inférieurs suffisent en général, mais il est parfois nécessaire d'empêcher le soulèvement des chaînes, notamment lorsque la trajectoire précitée suit des bosses et des creux définis par des parties convexes et concaves respectivement des rails inférieurs 12. Dans ce cas, les rails inférieurs 12 coopèrent avec des rails supérieurs 14 éventuellement recouverts d'un revêtement de glissement 15. Les chaînes 1 et 2 reposent alors sur les rails inférieurs 12 et prennent appui contre les rails supérieurs 14.

Le dispositif de transport de l'invention est adapté à ce tapis spiral mobile et illustré comme celui-ci par les figures 1 à 4.

Il convient également si le tapis mobile est rectiligne et s'il comporte des chaînes de rive sans jeu longitudinal.

Suivant l'invention, le dispositif de transport comporte des arceaux rectangulaires 16 dont les parties latérales ou montants 17 et 18 sont soudés sur les tiges 6 près des chaînes 1 et 2, leur partie médiane horizontale 19 constituant une traverse. Toutes les traverses 19 sont surélevées par rapport aux chaînes 1 et 2 et sont situées dans une surface parallèle à celle définie par ces chaînes ; en outre, les arceaux 16 sont toujours perpendiculaires à cette surface définie par les chaînes ; en d'autres termes, ils s'étendent radialement par rapport aux rails inférieurs 12.

A certaines traverses 19 sélectionnées sont alors suspendues des auges 20 qui s'étendent transversalement au-dessus de la surface définie par lesdites traverses, pour être ouvertes vers le haut.

Les traverses sélectionnées sont distantes d'un pas multiple du pas des tiges 6. Dans l'exemple représenté, le pas des traverses 19 est triple de celui des tiges.

De préférence, les auges 20 sont formées dans une bande non collante. La bande peut être constituée par un tissu en fibres de verre enduit de polytétrafluoréthylène ("teflon") ou de silicone. Cette bande est soutenue par les traverses 19 auxquelles elle est fixée par tout moyen approprié : clipsage, collage, agrafage, rivetage, boulonnage, gainage

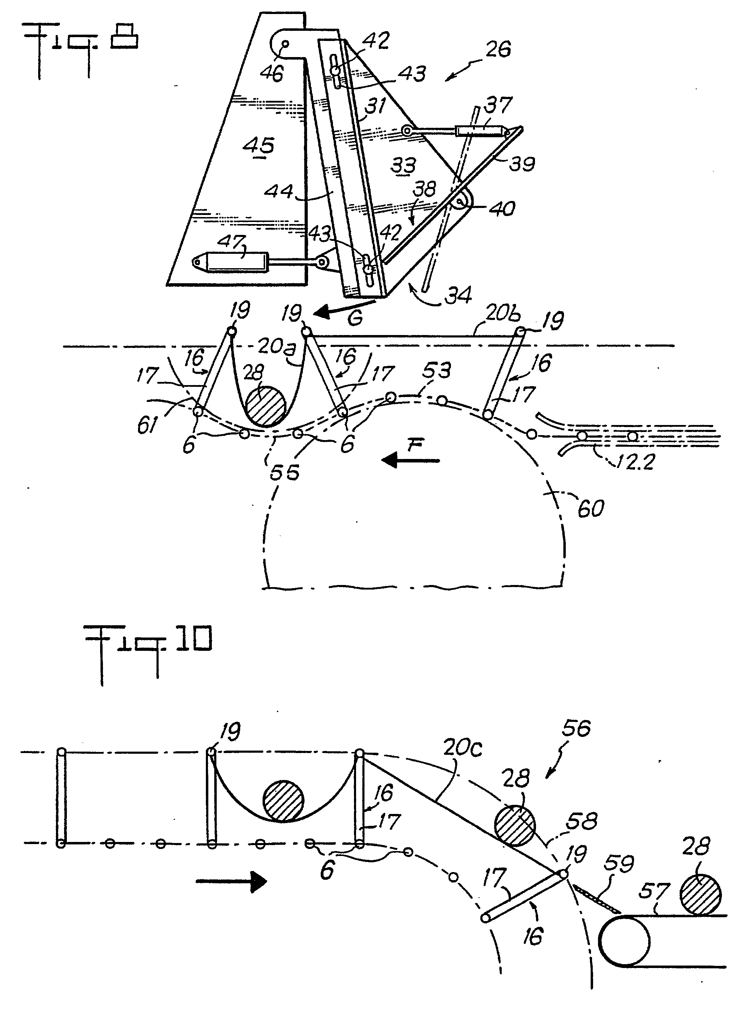

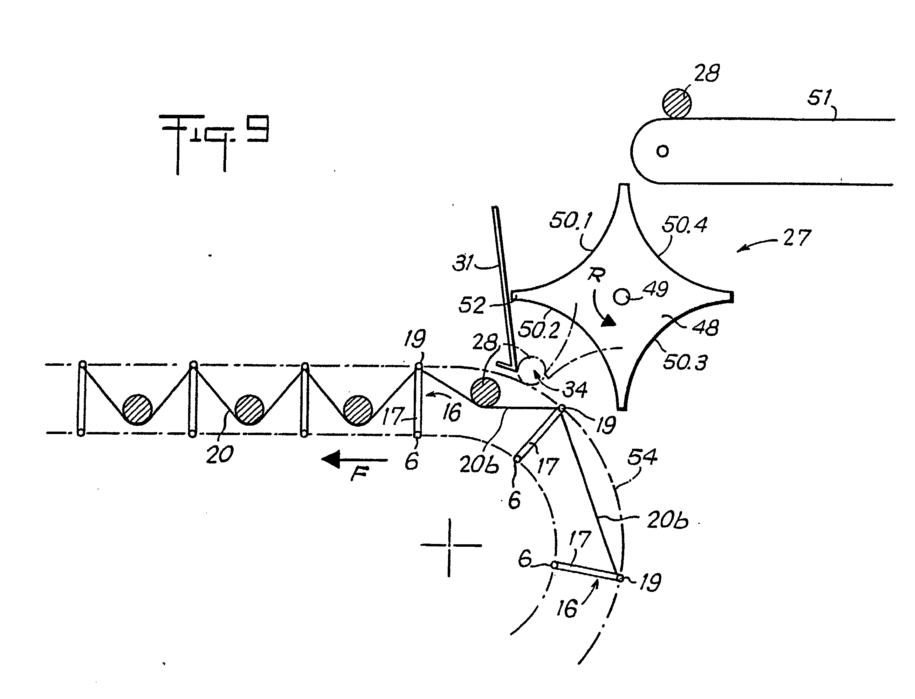

... Elle pend entre deux traverses consécutives et forme, lorsque les chaînes sont sensiblement droites (figure 6), des auges 20 de forme et de profondeur convenant à la réception du produit en pâte molle choisi, de la baguette en pâte crue par exemple. Ces auges 20a (figure 8) se referment sur elles-mêmes pour mieux calibrer la baguette lorsque les arceaux 16 convergent l'un vers l'autre. Lesdites auges 20 b (figures 7, 8 et 9) ou 20 c (figure 10) s'aplatissent pour mieux recevoir ou respectivement évacuer la baguette lorsque les arceaux 16 divergent l'un de l'autre.

Suivant une variante illustrée par la figure 5, les rails 12 et éventuellement 14 ou autres éléments de guidage peuvent coopérer, non plus avec les chaînes 1 et 2, mais avec les extrémités des tiges 6 entre les parties montantes 17, 18 et lesdites chaînes 1, 2.

Par ailleurs, et ainsi que cela ressort de la figure 7, les éléments de guidage peuvent comporter un rouleau inférieur 60 monté fou et conférant aux chaînes la forme de la portion convexe 53 décrite dans ce qui suit. Le rouleau 60 coopère alors avec des éléments de rail supérieurs 14.1 et 14.2 situés de part et d'autre. Bien entendu, le rail inférieur 12 est interrompu pour le passage du rouleau à proximité duquel sont situées ses extrémités 12.1 et 12.2.

Comme le montre la figure 8, les éléments de guidage peuvent également comporter un rouleau supérieur 61 monté fou et conférant aux chaînes la forme de la portion concave 55 décrite dans ce qui suit. Ce rouleau supérieur 61 coopère avec deux éléments de rail inférieurs 12.1 et 12.2 situés de part et d'autre ou avec deux rouleaux inférieurs 60 (figure 8) ou avec un rouleau inférieur et un élément de rail inférieur.

Le tapis à auges surélevées 20 coopère avec un dispositif de chargement 24 (figure 6) ou 25 (figure 7) ou 26 (figure 8) ou 27 (figure 9) ou autre.

Ce dispositif de chargement reçoit par gravité les produits en pâte molle, tels que des baguettes 28 en pâte crue et les distribue successivement dans les auges 20. Etant donné que les chaînes 1 et 2 du tapis sont entraînées en translation continue et par conséquent que les auges 20 défilent en continu, le dispositif de chargement 24, 25, 26 ou 27 est actionné par un dispositif de commande, non représenté, qui est asservi à la vitesse du tapis et est relié à un circuit de déclenchement à fonction "et". Ce circuit reçoit les impulsions d'un détecteur de produit placé sur le réceptacle du dispositif de chargement et d'un détecteur 29 de passage des montants 17 ou 18 des arceaux 16 ou des éléments en oméga 21. Le détecteur 29 de produit n'est pas représenté ; n'importe quel type convient et par exemple il peut être constitué par une source lumineuse et une cellule photoélectrique convenablement disposées. Le détecteur 29 de passage des montants 17 et 18 et donc des traverses 19 et des auges 20 peut être de n'importe quel type : microcontact, détecteur de proximité ... ; de toute façon, ce détecteur 29 (figure 6) est placé à un endroit quelconque, de préférence proche du dispositif de chargement, mais géographiquement identifié par le dispositif de commande pour que son calculateur effectue les corrections nécessaires.

Plusieurs formes de réalisation du dispositif de chargement sont illustrées par les figures 6 à 9.

Suivant la première (figure 6), il comporte une trémie 30 de réception individuelle des baguettes 28 dont la paroi 31, située en aval si l'on considère le sens F de défilement des auges, est faiblement inclinée (angle "a") vers le bas et l'amont par rapport à un plan P vertical donc sensiblement perpendiculaire à la surface définie par les rails 12. L'expérience a montré que cette faible inclinaison vers l'amont est favorable à une chute précise de la baguette et à la rectitude de celle-ci dans l'auge 20 correspondante. La trémie 30 présente également une paroi amont 32 en rampe inclinée reliée par des parois latérales 33 à la paroi aval 31. Cette trémie délimite à sa base une ouverture allongée de distribution 34 située au plus près des auges mobiles 20 et normalement obturée par une trappe coulissante 35. Cette trappe ou élément d'ouverture est guidée en translation dans une glissière 36 de la trémie et attelée à un vérin d'actionnement 37, d'un type quelconque (pneumatique, hydraulique, électrique, mécanique ...), prenant appui sur un élément fixe. Le vérin 37 est mis, pour son actionnement, sous la dépendance du dispositif de commande précité. Dans l'exemple représenté, la trémie est fixe, mais il peut être avantageux de pouvoir règler son niveau (comme sur la figure 7 notamment) pour amener l'ouverture 34 à la meilleure distance des auges 20.

Dans la deuxième forme de réalisation illustrée par la figure 7, on retrouve une trémie 38 ayant une paroi aval faiblement inclinée 31, une paroi amont en rampe inclinée 39 et des parois latérales 33. Dans ce cas, la paroi amont 39 est montée pivotante autour d'un axe 40 et reliée à un vérin d'actionnement 37 de type quelconque. En position de fermeture représentée en trait plein sur la figure 7, la paroi amont 39 rejoint la paroi aval 31, tandis qu'en position d'ouverture représentée en trait mixte, elle s'en écarte vers l'amont et libère ainsi l'ouverture 34. La paroi aval 31 est fixée sur un support fixe 41 au moyen de boulons 42 traversant des lumières oblongues descendantes 43 afin que le réglage de niveau précité soit possible.

Dans la troisième forme de réalisation illustrée par la figure 8, on retrouve la trémie 38 à paroi amont pivotante 39. Qu'il s'agisse de cette trémie 38 ou de celle 30 (figure 6) de la première forme de réalisation, la paroi aval 31 est règlable en niveau, grâce aux boulons 42, par rapport à un support pivotant 44 relié à un bâti fixe 45 par l'intermédiaire d'un axe d'articulation 46 et d'un vérin 47 de type quelconque. Lorsque le vérin est allongé, la paroi aval 31 est convenablement inclinée suivant l'angle "a". Lorsque le vérin se rétracte, ce qui se produit en relation de temps avec le pivotement d'ouverture de la paroi amont 39 (figure 8) ou le coulissement de la trappe 35 (figure 6) sous la dépendance du dispositif de commande précité, ladite paroi aval 31 pivote dans le sens de la flèche G sensiblement à la même vitesse que le tapis à auges 20 défile de sorte que la baguette 28 accompagne lors de sa distribution l'auge 20 dans laquelle elle doit se loger.

Suivant la quatrième forme de réalisation illustrée par la figure 9, le dispositif de chargement 27 comporte un rotor 48 solidaire d'un arbre 49 s'étendant suivant un axe transversal et relié à un dispositif d'entraînement en rotation mis sous la dépendance du dispositif de commande précité pour que le rotor tourne dans le sens de la flèche R opposé à celui du défilement des auges 20 suivant la flèche F et à une vitesse appropriée à une bonne distribution. Le rotor 48 délimite, à sa périphérie, des alvéoles concaves 50 au nombre de quatre 50.1 à 50.4 dans l'exemple représenté. Dans la position où se trouve l'alvéole 50.1, celui-ci reçoit une baguette 28 tombant d'un convoyeur d'alimentation 51 et la dirige vers une paroi aval 31 analogue aux précédentes, cette paroi pouvant être fixe ou pivotante vers l'aval et ou non règlable en niveau. La baguette 28 descend donc le long de la paroi 31 en étant accompagnée par la lèvre 52 du rotor se trouvant en aval de l'alvéole 50.1. Lorsque l'ouverture 34 ménagée entre cette paroi et cette lèvre est suffisamment large, la baguette tombe dans l'auge 20 située à son aplomb.

Le pas des alvéoles 50 dépend de la vitesse de rotation du rotor. Si la vitesse tangentielle de celui-ci est égale à la vitesse de défilement des auges 20, le pas des alvéoles 50 est égal au pas des traverses 19.

Ainsi que cela est déjà indiqué dans ce qui précède, il peut être avantageux d'aplatir les auges 20 b (figures 7, 8 et 9) afin qu'elles se rapprochent de l'ouverture 34 de distribution. A cet effet, la trajectoire des tiges 6 présente à l'aplomb des dispositifs 24, 25, 26 et 27 (si les dispositifs 27 sont situés au-dessus de la trajectoire normale : rectiligne ou spirale de la bande) des portions convexes 53 faisant saillie vers le haut. Ainsi, les montants 17 (18) divergent les uns des autres et leurs traverses 19 s'écartent en tendant la bande et en aplatissant les auges 20 b.

La hauteur de chute des baguettes se trouve donc considérablement diminuée, de sorte que chaque baguette guidée par la paroi aval 31 a tendance à conserver sa forme pratiquement rectiligne et sa longueur en parvenant sur l'auge aplatie 20 b. Au fur et à mesure que l'auge considérée quitte les portions 53, les montants 17 se redressent et tendent à converger les uns vers les autres (figure 7) de sorte que ladite auge 20 d se creuse en se refermant d'abord sur elle-même et en reprenant ensuite sa forme initiale. Pendant cette évolution, l'auge modèle la baguette en la remettant rectiligne si elle s'est déformée quelque peu pendant la chute.

Il peut également être avantageux d'accentuer ce phénomène en refermant davantage les auges 20a (figure 8) sur elles-mêmes pour qu'elles enveloppent mieux les baguettes. A cet effet, la trajectoire des tiges 6 présente en aval de l'ouverture 34 de distribution des dispositifs 24 à 27 et de préférence à la suite des portions convexes 53 ou des portions de renvoi 54 décrites ci-après, des portions concaves 55 (figure 8) faisant un creux ouvert en haut et coopérant avec des portions parallèles des rails supérieurs 14. Ainsi, les montants 17 (18) convergent les uns vers les autres et leurs traverses 19 se rapprochent en accentuant leur creux enveloppant. Les auges 20a se referment alors sur les baguettes 28 et les redressent si elles sont déformées.

En ce qui concerne la quatrième forme de réalisation, il est dit que le dispositif de chargement 27 peut être situé le long de la trajectoire normale du tapis (rectiligne ou spirale). Dans ce cas, la hauteur de chute de chaque baguette 28 est relativement importante.

Pour réduire cette hauteur, le rotor 48 peut être situé, ainsi que cela ressort de la figure 9, près d'une portion de renvoi 54 du tapis, portion qui est déterminée généralement par un jeu de poulies à axe horizontal, sur lesquelles les chaînes 1 et 2 s'enroulent à l'entrée du convoyeur de surgélation spiral par exemple. Dans ce cas, non seulement l'ouverture 34 peut être rapprochée de la portion de renvoi 54, mais également dans cette portion, les montants 17 (18) divergent, les traverses 19 s'écartent et les auges 20 b s'aplatissent en se rapprochant de ladite ouverture 34.

Enfin, le tapis à auges surélevées 20 peut coopérer avec un dispositif de déchargement 56 (figure 10) grâce auquel les baguettes surgelées ou autres produits sont déposés avec douceur sur un transporteur d'évacuation 57.

Comme le montre la figure 10, ce dispositif de déchargement 56 met à profit le phénomène décrit ci-dessus. Le transporteur 58 est disposé dans la zone basse de la portion de renvoi 58 qui se trouve à la sortie du convoyeur de surgélation, spiral par exemple, cette portion 58 étant, comme la portion 54, déterminée par un jeu de poulies à axe horizontal sur lesquelles les chaînes 1 et 2 s'enroulent. Dès lors, dans cette portion 58, les montants 17 (18) divergent, les traverses 19 s'écartent et les auges 20 c s'aplatissent en plans inclinés ; les auges déversent alors sans choc les baguettes surgelées 28 sur une rampe fixe 59 qui les dirige vers le transporteur 57.

## Revendications

1.- Dispositif pour le transport avec chargement et déchargement de produits en pâte molle, tels que des pains, baguettes (28) ou autres en pâte crue, comprenant deux chaînes guidées le long d'éléments de guidage (12) et une pluralité d'auges souples (20) s'étendant côte à côte transversalement pour recevoir d'en haut lesdits produits, les auges (20) étant suspendues à des traverses (19) reliées aus chaînes (1, 2) et situées au-dessus de la surface définie par celles-ci de façon à former un tapis à auges surélevées, caractérisé :

- en ce qu'il fait application de deux chaînes (1, 2) rétractables dont les maillons (3) sont articulés deux à deux au moyen de tiges (6) s'entendant transveralement entre ces chaînes, chaque extrémité de tige étant fixée (7, 8) à un maillon et traversant librement une lumière longitudinale de guidage du maillon conjugué,

- et en ce que chaque traverse (19) fait corps, au moyen de parties latérales montantes rigides (17, 18) avec la tige (6) sélectionnée des deux chaînes,

— et en ce que les tiges des deux chaînes sont guidées avec précicion le long de moyens de guidage, les traverses étant exemptes de guidage.

2.- Dispositif selon la revendication 1, caractérisé en ce que le tapis à auges surélevées coopère avec un dispositif de chargement (24, 25, 26 ou 27) recevant par gravité les produits en pâte molle (28) et les distribuant successivement dans les auges (20) défilant en continu, le dispositif de chargement étant actionné par un dispositif de commande asservi à la vitesse du tapis et relié à un circuit de déclenchement fonction "et" recevant les impulsions d'un détecteur de produit dans ce dispositif de chargement et d'un détecteur de passage (29) de l'une des parties montantes (17, 18) de chaque traverse (19) support d'auge (20).

3.- Dispositif selon la revendication 2, caractérisé en ce que le dispositif de chargement (24 ; 25 ; 26) comporte, considérant le sens (F) de défilement du tapis au-desssus de ces auges (20) une trémie de réception (30, 38) des produits en pâte molle (28) dont la paroi aval (31) est faiblement inclinée (a) vers le bas et l'amont par rapport à un plan transversal vertical (P) et dont l'élément d'ouverture (35, 39) situé au plus près des auges (20) est relié pour se déplacer vers l'amont à un organe d'actionnement (37) mis sous la dépendance du dispositif de commande précité.

4.- Dispositif selon la revendication 3, caractérisé en ce que la trémie (38) présente une paroi amont (39) descendant en rampe inclinée jusqu'à la paroi aval (31), cette rampe étant montée pivotante (40) et reliée à l'organe d'actionnement (37) précité pour constituer l'élément d'ouverture.

5.- Dispositif selon la revendication 3, caractérisé en ce que la trémie (30) présente une paroi amont (32) descendant en rampe inclinée en délimitant avec la paroi aval (31) une ouverture de distribution (34), cette ouverture étant obturée par une trappe coulissante (35) reliée à l'organe d'actionnement (37) précité.

6.- Dispositif selon la revendication 3, caractérisé en ce que le dispositif de chargement (27) comporte un rotor (48) monté tournant autour d'un axe transversal (49) et relié à un dispositif d'entraînement en rotation mis sous la dépendance du dispositif de commande précité, ce rotor délimitant des alvéoles périphériques concaves (50.1 à 50.4) qui, lorsqu'ils se trouvent successivement en position de distribution (50.1), reçoivent par gravité un produit en pâte molle (28) et le dirigent vers une paroi (31) située, si l'on considère le sens de défilement (F) des auges (20), en aval du rotor (48) lequel tourne en faisant défiler les alvéoles dans le sens (R) opposé à celui des auges (20) et ladite paroi aval (31) étant faiblement inclinée vers le bas et l'amont par rapport à un plan transversal vertical.

7.- Dispositif selon la revendication 6, caractérisé en ce que le pas périphérique des alvéoles (50.1 à 50.4) du rotor (48) est sensiblement égal au pas des auges (20) dans la zone de distribution.

8.- Dispositif selon l'une quelconque des revendications 4 à 6, caractérisé en ce qu'au moins la paroi aval (31) est reliée, pour accompagner lors de l'ouverture de la trémie les auges vers l'aval, à un organe d'actionnement (47) mis sous la dépendance du dispositif de commande précité.

9.- Dispositif selon l'une quelconque des revendications 1, 3 et 6, comprenant un dispositif de chargement au-dessus du tapis, caractérisé en ce que les éléments de guidage (12) du tapis auges surélevées (20) présentent, en regard de l'ouverture (34) de distribution du dispositif de chargement (24 ; 25 ; 26 ; 27) ou de l'aire de réception d'un dispositif de déchargement, des portions convexes(53) en saillie vers le haut de façon qu'en franchissant ces portions, les parties montantes (17, 18) des deux traverses supports (19) contiguës de chaque auge (20) divergent vers le haut et tendent l'auge considérée en l'aplatissant et en la rapprochant de ladite ouverture (34) pour réduire la hauteur de chute d'un produit en pâte molle.

10.- Dispositif selon l'une quelconque des revendications 1, 3, 6 et 9, comprenant un dispositif de chargement au-dessus du tapis, caractérisé en ce qu'en aval de l'ouverture (34) de distribution du dispositif de chargement (24 ; 25 ; 26 ; 27), les éléments de guidage (12) du tapis à auges surélevées (20) présentent des portions concaves (55) en creux vers le haut de façon qu'en franchissant ces portions, les parties montantes (17, 18) des deux traverses-supports (19) contiguës de chaque auge (20) convergent vers le haut et tendent à refermer l'auge considérée sur elle-même pour parfaire la conformation rectiligne du produit en pâte molle (28) que cette auge contient.

11.- Dispositif selon la revendication 9 ou 10, caractérisé en ce que chaque élément de guidage (12) comporte également, au moins dans chaque partie convexe ou concave de la trajectoire, un rouleau inférieur (60) ou supérieur (61) interposé entre des éléments de rail inférieurs (12.1, 12.2) ou supérieur (14.1, 14.2) montés fous et coopérant avec des éléments de rail supérieurs (14.1, 14.2) ou inférieurs (12.1, 12.2) respectivement, situés de part et d'autre.

**Patentansprüche**

1. Vorrichtung für den Transport mit Beladen und Entladen von Produkten aus weichem Teig, wie Broten, Baguettes (28) oder anderen aus rohem Teig, die zwei Ketten aufweist, die entlang von Führungselementen (12) geführt sind und eine Mehrzahl von nachgiebigen Trögen (20) aufweist, die sich Seite an Seite quer erstrecken, um von oben die genannten Produkte aufzunehmen, wobei die Tröge (20) an Traversen (19) aufgehängt sind, die mit den Ketten (1, 2) verbunden sind und über der von ihnen definierten Fläche angeordnet sind, derart, daß sie einen Teppich bzw. eine Bahn aus angehobenen Trögen bilden, dadurch gekennzeichnet,
— daß sie die Anwendung von zwei einziehbaren Ketten (1, 2) macht, von denen die Kettenglieder (3) paarweise mittels Stangen (6) angelenkt sind, die sich quer zwischen den Ketten erstrecken, wobei jedes Ende der Stange (7, 8) an ein Kettenglied befestigt ist und frei eine Längsführungsausnehmung des zugehörigen bzw. verbundenen Kettenglieds durchquert,
— daß jede Traverse (19) mittels seitlich aufsteigenden festen Bereichen (17, 18) einen Körper bildet, mit der Stange (6), ausgewählt aus den beiden Ketten, und

— daß die Stangen der beiden Ketten mit Präzision entlang von Führungseinrichtungen geführt sind, wobei die Traversen frei von Führung sind.

2. Vorrichtung nach Anspruch 1, dadurch gekennzeichnet, daß die Bahn mit angehobenen Trögen mit einer Vorrichtung zum Beladen (24, 25, 26 oder 27) zusammenwirkt, die durch Schwerkraft die Produkte aus weichem Teig (28) aufnimmt und sie sukzessive in die Tröge (20) verteilt, die kontinuierlich vorbeiziehen, wobei die Beladevorrichtung durch eine Steuervorrichtung betätigt wird, die abhängig ist von der Geschwindigkeit des Teppichs und mit einem Auslösekreis von der Funktion "und" verbunden ist, der die Impulse eines Detektors für das Produkt in dieser Beladevorrichtung und eines Vorbeibewegungsdetektors (29) des einen der aufsteigenden Bereiche (17, 18) einer jeden Traverse (19), die eine Stütze des Troges (20) ist, empfängt.

3. Vorrichtung nach Anspruch 2, dadurch gekennzeichnet, daß die Beladevorrichtung (24; 25, 26) unter Berücksichtigung der Vorbeiziehrichtung (F) der Bahn oberhalb dieser Tröge (20) eine Schüttrinne (30, 38) der weichen Teigprodukte (28) aufweist, deren stromabwärtige Seitenwand (31) leicht geneigt (a) ist nach unten und stromauf bezüglich einer vertikalen Querebene (P), und von der das Öffnungselement (35, 39), das am nächsten zu den Trögen (20) angeordnet ist verbunden ist, um sich stromauf zu einem Betätigungsorgan (37) zu bewegen, welches in Abhängigkeit der vorgenannten Steuervorrichtung gebracht ist.

4. Vorrichtung nach Anspruch 3, dadurch gekennzeichnet, daß die Schüttrinne (38) eine stromaufseitige Seitenwand (39) aufweist, die in geneigter Rampe bis zur stromabwärtigen Seitenwand (31) absteigt, wobei diese Rampe schwenkend (40) angeordnet ist und mit dem vorgenannten Betätigungsorgan (37) verbunden ist, um das Öffnungselement zu bilden.

5. Vorrichtung nach Anspruch 3, dadurch gekennzeichnet, daß die Schüttrinne (30) eine stromaufseitige Seitenwand (32) aufweist, die in einer geneigte Rampe abfällt unter Begrenzen zusammen mit der stromabseitigen Seitenwand (31) einer Verteilöffnung (34), wobei diese Öffnung durch eine Gleitfalle (35) verschlossen wird, die mit dem vorgenannten Betätigungsorgan (37) verbunden ist.

6. Vorrichtung nach Anspruch 3, dadurch gekennzeichnet, daß die Beladevorrichtung (27) einen Rotor (48) aufweist, der drehend um eine transversale Achse (49) angeordnet ist und mit einer Drehantriebsvorrichtung verbunden ist, die unter Abhängkeit der vorgenannten Steuervorrichtung gebracht ist, wobei dieser Rotor konkave Umfangszellen (50.1 bis 50.4) begrenzt, die, wenn sie sich aufeinanderfolgend in Verteilposition (50.1) befinden, durch Schwerkraft ein Produkt aus weichem Teig (28) aufnehmen und es auf eine Seitenwand (31) richten, wenn man die Vorbeiziehrichtung (F) der Tröge (20) berücksichtigt, stromab des Rotors (48), der sich dreht unter Erzeugen eines Vorbeiziehens der Zellen bzw. Alveolen in der Richtung (R), entgegen jener der Träge (20), und wobei die stromabseitige Seitenwand (31) leicht geneigt nach unten und stromauf gerichtet ist bezüglich einer vertikalen Querebene.

7. Vorrichtung nach Anspruch 6, dadurch gekennzeichnet, daß der Umfangsschritt der Zellen (50.1 bis 50.4) des Rotors (48) im wesentlichen gleich dem Schritt der Tröge (20) in der Verteilzone ist.

8. Vorrichtung nach einem der Ansprüche 4 bis 6, dadurch gekennzeichnet, daß wenigstens die stromabseitige Seitenwand (31) verbunden ist, um bei der Öffnung der Schüttrinne die Tröge stromab zu begleiten, mit einem Betätigungsorgan (47), welches in Abhängigkeit der vorgenannten Steuereinrichtung gebracht ist.

9. Vorrichtung nach einem der Ansprüche 1, 3 und 6, die eine Beladevorrichtung oberhalb der Bahn aufweist, dadurch gekennzeichnet, daß die Führungselemente (12) der Bahn mit angehobenen Trögen (20) gegenüber der Verteilöffnung (34) der Beladevorrichtung (24; 25; 26; 27) oder des Aufnahmebereichs einer Entladevorrichtung, konvexe Abschnitte (53) aufweisen, die nach oben derart vorspringen, daß, wenn sie diese Abschnitte erreichen, wobei die aufsteigenden Bereiche (17, 18) der beiden Stütztraversen (19), die jedem Trog (20) zugeordnet sind, nach oben divergieren und den betrachteten Trog dehnen in dem sie ihn abflachen und ihn der genannten Öffnung (34) zuführen, um die Fallhöhe eines Produktes aus weichem Teig zu verringern.

10. Vorrichtung nach einem der Ansprüche 1, 3, 6 und 9 mit einer Beladevorrichtung oberhalb der Bahn, dadurch gekennzeichnet, daß stromab der Verteilöffnung (34) der Beladevorrichtung (24; 25; 26; 27) die Führungselemente (12) der Bahn mit angehobenen Trögen (20) konkave Abschnitte (55) aufweisen, die nach oben hohl sind, derart, daß unter Überschreiten dieser Abschnitte die aufsteigenden Bereiche (17, 18) der beiden Traversenstützen (19), die einem jeden Trog (20) zugeordnet sind, nach oben konvergieren und dazu tendieren, den betrachteten Trog auf sich selbst zu schließen, um die geradlinige Bildung des Produktes aus weicher Teigmasse (28), die dieser Trog enthält, zu vervollständigen.

11. Vorrichtung nach Anspruch 9 oder 10, dadurch gekennzeichnet, daß jedes Führungselement (12) ebenfalls wenigstens in jedem konvexen oder konkaven Bereich der Bahn eine untere (60) oder obere (61) Rolle aufweist, die zwischen unteren (12.1, 12.3) oder oberen (14.1, 14.2) Schienenelementen angeordnet sind, die lose angeordnet sind und mit den oberen (14.1, 14.2) bzw. unteren (12.1, 12.2) Schienenelementen zusammenwirken, die beiderseits angeordnet sind.

## Claims

1. Device for transporting semisolid goods such as unbaked loaves of French or other bread (28) and including loading and unloading said goods, the device including a moving belt comprising two chains guided along guiding elements (12) and a plurality of flexible bins (20) extending side by side transversely to receive said products from the top, the bins (20) being suspended to cross-members (19) connected to the chains (1, 2) and situated above the surface defined by the latter in order to form a belt with raised bins, characterized in that:

    –two retractable chains (1, 2) are used, of which the links (3) are hinged together in pairs by way of rods (6) which extend transversely between said chains, each rod end being joined (7, 8) to a link and passing through a longitudinal guide slot provided in the associated link,

    – each cross-member (10) is joined via rigid lateral risers (17, 18) to the selected rod (6) of the two chains, and

    – the rods of the two chains are guided with precision along guiding means, the cross-members being non-guided.

2. Device according to claim 1, characterized in that the raised bin belt co-operates with a loading device (24, 25, 26 or 27) receiving semisolid goods (28) under gravity and delivering them successively into the continuously moving bins (20), the loading device being actuated by a control device under the control of the belt speed and connected to an AND trigger circuit receiving pulses from a detector for detecting goods in the loading device and from a detector (29) for detecting the passage of one of the riser portions (17, 18) of each cross member (19) supporting a bin (20).

3. Device according to claim 2, characterized in that the loading device (24; 25; 26) comprises, in the direction (F) of bin movement and above said bins (20) a hopper (30, 38) for receiving semisolid goods (28) and having a downstream wall (31) at a small downwards and upstream inclination (a) relative to a vertical transverse plane (P), and having a shutter member (35, 39) situated as close as possible to the bins (20) and conected for upstream displacement to an actuator member (37) under the control of said control device.

4. Device according to claim 3, characterized in that the hopper (38) has an upstream wall (39) descending as an inclined slope to the downstream wall (31), said slope being pivotally mounted (40) and being connected to the said actuator member (37) in order to constitute the shutter element.

5. Device according to claim 3, characterized in that the hopper (36) has an upstream wall (32) descending as an inclined slope and delimiting, together with the downstream wall (31), a delivery opening (34), said opening being closed by a sliding door (35) connected to the said actuator member (37).

6. Device according to claim 3, characterized in that the loading device (27) comprises a rotor (48) mounted to rotate about a transverse axis (49) and connected to a rotary drive device for driving it in rotation under the control of the said control device, said rotor delimiting peripheral concave cells (50.1 to 50.4), when they come successively into a delivery position (50.1), receive an item of semisolid goods (28) under gravity and direct it against a wall (31) situated downstreams from the rotor (48) in the direction of bin displacement (F), said rotor rotating to move the cells in the opposite direction (R) to the bins (20) and said downstream wall (31) sloping downwardly and in an upstream direction at a small angle relative to a vertical transverse plane.

7. Device according to claim 6, characterized in that the peripheral pitch of the cells (50.1 to 50.4) is substantially equal to the pitch of the bins (20) in the delivery zone.

8. Device according to any one of claims 4 to 6, characterized in that at least the downstream wall (31) is connected, for the purpose of accompanying the bins downstream when the hopper is opened, to an actuator member (47) under the control of the said control device.

9. Device according to any one of claims 1, 3 and 6, including a loading device above the belt, characterized in that the guide elements (12) of the raised bin belt (20) are provided with convex portions (53) projecting upwardly beneath the delivery opening (34) of the loading device (24; 25; 26; 27) or the reception area of an unloading device, in such a manner that the riser portions (17, 18) of the two contiguous support members (19) of each bin (20) diverge upwardly as they pass over said portions, thereby stretching the corresponding bin and flattening it, thereby moving it towards said opening (34) in order to reduce the height through which the semisolid goods are dropped.

10. Device according to any one of claims 1 to 3, 6 and 9, including a loading device above the belt, characterized in that downstream form the delivery opening (34) from the loading device (24; 25; 26; 27), the guide elements (12) of the raised bin belt (20) have concave portions (55) with upwardly directed hollows such that as the riser portions (17, 18) of the two contiguous support cross-members (19) of each bin (20) pass along said concave portions they converge upwardly tending to close the bin under consideration in on itself in order to improve the rectilinear shape of the item of semisolid goods (28) contained in the bin.

11. Device according to claim 9 or 10, characterized in that each guide element (12) also includes at least in each of the convex or concave portions of its path a bottom (0) or top (61) roll interposed between the top (14.1, 14.2) or bottom (12.1, 12.2) rail elements and mounted freely to cooperate with the top (14.1, 14.2) or bottom (12.1, 12.2) rail elements respectively situated on either side.

Fig.1

Fig.2

Fig. 3

Fig. 5

# Fig. 4

Fig. 6

Fig. 7

Fig. 8

Fig. 10

Fig.9

EP 0 243 268 B1